# DEMANDE DE BREVET EUROPEEN

(11) **EP 1 505 334 A1**
(43) Date de publication de la demande: **09.02.2005**
(21) Numéro de dépôt: 04291963.9
(22) Date de dépôt: 30.07.2004
(51) Int. Cl.: F16M 11/12, F16M 11/18

(54) **Système de plate-forme stabilisée**

(30) Priorité: 06.08.2003 FR 0309709
(71) Demandeur: Georget, Jean, 93220 Gagny (FR); Humbert, Daniel, 55110 Dun sur Meuse (FR)
(72) Inventeur: Georget, Jean, 93220 Gagny (FR); Humbert, Daniel, 55110 Dun sur Meuse (FR)
(74) Mandataire: Peaucelle, Chantal

(57) **Abrégé**

Ce système comprend :
- une première combinaison de trois platines d'un premier type superposés,
- une seconde combinaison de deux platines d'un second type (60,61) superposées,
le mouvement global de la surface plane externe (30) de ladite plate-forme résultant de la combinaison des trois mouvements de rotation autour de trois axes dits, respectivement, de tangage, de roulis et de lacet (T, R, L),
lesdits axes de tangage, de roulis et de lacet étant orthogonaux deux à deux et se coupant en un point unique (8), ce dernier constituant le centre de cardan fictif du système.

## Description

L'invention se rapporte, de façon générale, à une nouvelle conception de plate-forme stabilisée et asservie, disposée sur un engin porteur fixe ou mobile de sorte que la surface plane extérieure de la plate-forme se maintienne dans un plan de référence orienté prédéterminé, par exemple, le plan horizontal orienté dans la direction du nord géographique, et se rapporte, en particulier, à une plate-forme constituée d'au moins quatre étages dont les mouvements de rotation respectifs asservis autour des trois directions perpendiculaires de l'espace permettent de compenser les mouvements du porteur mobile sur lequel est fixée la plate-forme.

L'utilisation d'une telle plate-forme concerne naturellement le monde du cinéma et peut être impliquée dans des applications très diverses, comme la surveillance de matériel et de réseau, type réseau électrique, ou réseau de télécommunications, ou encore SNCF.

Un des buts du cinéaste est de maintenir l'attention de son public sur le sujet filmé. Parmi les causes de détournement de cette attention, on note l'inclinaison de l'image par rapport à un repère habituellement fixe : la ligne d'horizon. Si la ligne d'horizon est placée vers la ligne centrale de l'image, une inclinaison de quelques minutes d'arc de celle-ci est pratiquement imperceptible à l'oeil non exercé. Si la ligne d'horizon est placée près du bord supérieur de l'image, une inclinaison, même faible, est flagrante par comparaison avec le bord de l'image.

Pour s'affranchir de ce défaut, les cinéastes utilisent une plate-forme telle que celle développée par la Société SERIP, qui permet de compenser le dévers du moyen supportant une caméra. La plate-forme, intercalée entre la caméra et le moyen support, se règle manuellement.

Son principe est de faire glisser un plateau sur des glissières. La conséquence de cette particularité est que l'axe de rotation est fictif. L'axe optique de la caméra est confondu avec l'axe de rotation. Naturellement, ce montage est utilisé sur un support immobile et ne permet pas de compenser les mouvements d'un support mobile.

Dans son principal aspect, l'invention concerne un système de plate-forme stabilisée et asservie soumis aux mouvements d'un engin porteur et caractérisé en ce qu'il comprend :
une embase fixée au support de plate-forme déposé sur l'engin porteur,
une première combinaison de trois platines d'un premier type, chacune étant constituée d'un bloc métallique de forme parallélépipédique comportant une face inférieure proche de l'engin porteur et une face supérieure opposée à ladite face inférieure par rapport audit bloc, et comprenant :
   - une platine inférieure,
   - une platine intermédiaire rendue solidaire de la platine inférieure par des premiers moyens de liaison mécanique et, de plus, rendue mobile en rotation autour d'un premier axe, dit de tangage, par des premiers moyens mécaniques d'asservissement et coopération de configurations géométriques complémentaires concernant respectivement la face supérieure de ladite platine inférieure et la face inférieure de ladite platine intermédiaire,
   - une platine supérieure rendue solidaire de ladite platine intermédiaire par des seconds moyens de liaison mécanique et, de plus, rendue mobile en rotation autour d'un second axe, dit de roulis, par des seconds moyens mécaniques d'asservissement et coopération de configurations géométriques complémentaires concernant, respectivement, la face supérieure de la platine intermédiaire et la face inférieure de la platine supérieure,
une seconde combinaison de deux platines d'un second type superposées, chacune étant constituée d'une plaque rigide, comportant :
   - une platine de base montée, de façon solidaire, soit sur ladite embase, soit sur ladite face supérieure de la platine supérieure et
   - une platine mobile en rotation autour d'un troisième axe dit de lacet et montée à rotation sur ladite platine de base,
les deux dites platines, de base et mobile, étant reliées par des troisièmes moyens de liaison mécanique,
ladite platine mobile étant rendue mobile en rotation par la commande de troisièmes moyens mécaniques d'asservissement,
le mouvement global de ladite surface plane externe de ladite plate-forme résultant de la combinaison des trois mouvements de rotation autour de trois axes dits, respectivement, de tangage, de roulis et de lacet,
lesdits axes de tangage, de roulis et de lacet étant orthogonaux deux à deux et se coupant en un point unique, ce dernier constituant le centre de cardan fictif du système,
- des moyens de détection et de mesure de variations angulaires ainsi que des vitesses de variation angulaire des positions instantanées de ladite surface plane extérieure de ladite plate-forme par rapport à la position dudit plan de référence orienté, lesdites variations étant essentiellement provoquées par les mouvements de l'engin porteur,
   lesdits moyens de détection et de mesure émettant des signaux électriques quantifiés avec signe,
- des moyens électroniques de calcul destinés :
   à calculer les grandeurs d'asservissement en réponse aux signaux émis par lesdits moyens de détection et de mesure, et
   à réaliser les asservissements requis par transmission desdites grandeurs d'asservissement calculées aux moteurs de commande des premiers, seconds et troisièmes moyens mécaniques d'asservissement.

Les avantages et les caractéristiques de l'invention apparaîtront plus clairement à la lecture de la description suivante d'un mode préféré de réalisation en relation avec les dessins annexés dans lesquels :
la figure 1 est une représentation schématique en perspective d'une première combinaison de trois platines selon l'invention,
la figure 2 est une vue de dessus, en perspective, de la platine inférieure avec ses éléments correspondants de configuration géométrique, de moyens de liaison mécanique et de moyens mécaniques d'asservissement selon l'invention,
la figure 3 est une vue de dessous, en perspective, de la platine intermédiaire avec ses éléments correspondants de configuration géométrique, de moyens de liaison mécanique et de moyens mécaniques d'asservissement selon l'invention,
la figure 4 est une coupe transversale selon le plan AA de la figure 2,
la figure 5 est une coupe longitudinale selon la plan BB de la figure 2,
la figure 6 est une vue simplifiée montrant un dispositif de rattrapage de jeu selon l'invention,
la figure 7 représente une vue en perspective d'une seconde combinaison de deux platines selon l'invention,
la figure 8 est une vue complète, en perspective, de la plate-forme selon l'invention.

### Description d'un mode préféré de réalisation

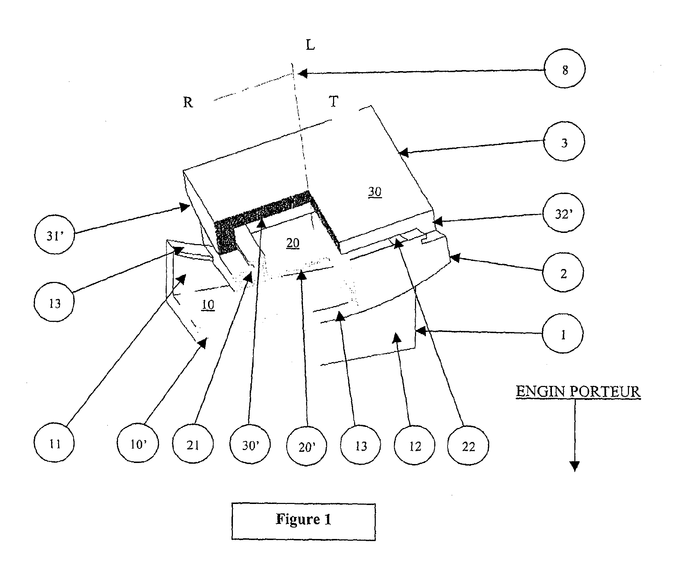

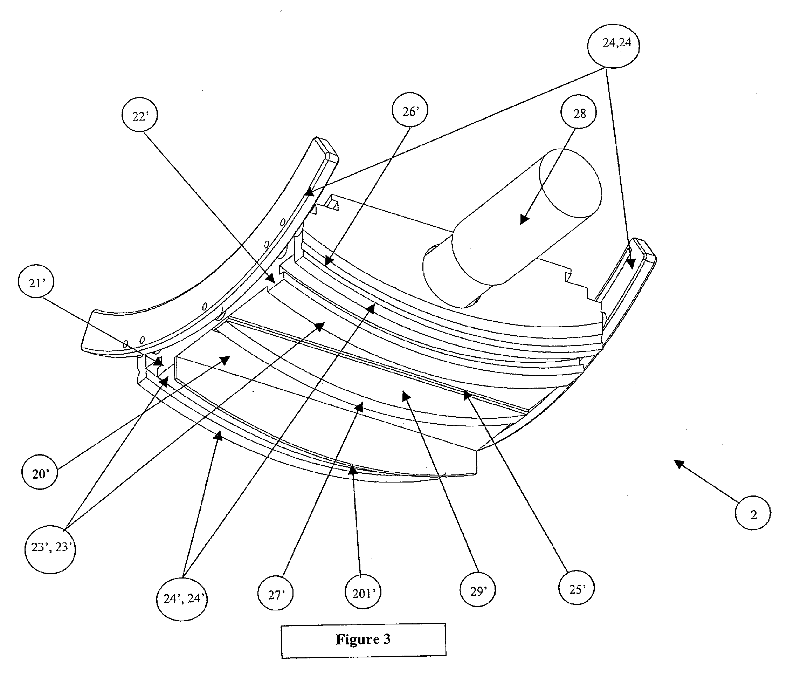

La figure 1 représente schématiquement, dans une vue en perspective, une combinaison de trois blocs rigides, par exemple métalliques, configurés et superposés, constituant les trois platines d'un premier type formant une première combinaison comprenant, respectivement :
- la platine inférieure 1,
- la platine intermédiaire 2,
- la platine supérieure 3,
chaque dite platine comportant une face inférieure 10', 20', 30', proche de l'embase (non représentée), fixée à l'engin porteur (non représenté) et sur laquelle doit reposer la plate-forme et une face supérieure 10, 20, 30 respectivement opposée et parallèle à ladite face inférieure ;
chaque bloc de platine de premier type, préalablement de forme parallélépipédique, présente des éléments caractéristiques respectifs, à savoir :
- un premier évidement réalisé sur la face supérieure de la platine inférieure 1 définissant une nouvelle face supérieure 10 de ladite platine inférieure et formant deux parois latérales 11 et 12 en saillie ;
- un second évidement réalisé sur la face inférieure de la platine intermédiaire 2 et s'étendant dans une direction parallèle au premier évidement, lequel définit une nouvelle face inférieure 20' de la platine intermédiaire 2 et deux parois latérales en saillie 21' et 22', peu visibles sur la figure 1 mais observables dans la figure 3 ;
- un troisième évidement réalisé sur la face supérieure de la platine intermédiaire 2 et s'étendant dans une direction perpendiculaire à la direction des premier et second évidements, lequel définit une nouvelle face supérieure 20 de la platine intermédiaire et deux parois latérales en saillie 21 et 22 ;
- un quatrième évidement réalisé sur la face inférieure de la platine supérieure 3 et s'étendant dans une direction parallèle à celle du troisième évidement, lequel définit une nouvelle face inférieure 30' de la platine supérieure 3 et forme deux parois latérales en saillie 31' et 32'.

Les surfaces supérieures ou inférieures desdites différentes parois latérales en saillie sont usinées pour former des paires de sections cylindriques concaves ou convexes telles que, par exemple, la paire de sections 13, 13, représentée dans la figure 1 et obtenue après usinage des surfaces supérieures des parois latérales 11 et 12 de la platine inférieure 1.

Les configurations géométriques résultant ainsi des évidements et des usinages de surface de parois latérales en saillie permettent un double mouvement de rotation, à savoir :
- un premier mouvement de rotation de la platine intermédiaire 2 par rapport à la platine inférieure 1 autour d'un premier axe de rotation appelé, par convention, "axe de tangage" (T) ;
- un second mouvement de rotation de la platine supérieure 3 par rapport à la platine intermédiaire 2 autour d'un second axe de rotation appelé, par convention, "axe de roulis" (R) ;

Sur cette première combinaison de 3 platines d'un premier type sera adaptée une seconde combinaison de deux platines d'un second type, détaillée ci-dessous, pour conférer à l'ensemble un troisième mouvement de rotation autour d'un troisième axe de rotation appelé, par convention, "axe de lacet" (L).

Les trois axes T, R et L étant orthogonaux deux à deux et se coupant en un point unique 8, le centre de cardan fictif du système.

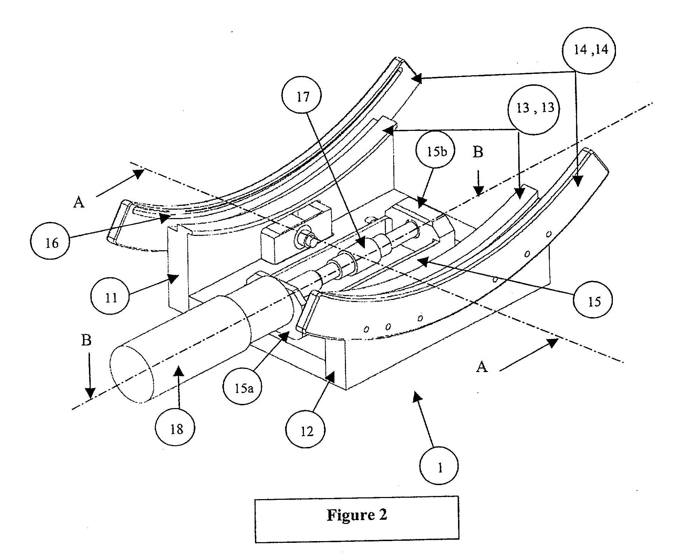

La figure 2 représente la platine inférieure 1, vue de dessus et en perspective, pour mettre en évidence une partie des caractéristiques essentielles de l'invention.

Ces caractéristiques concernent à la fois la présentation des configurations géométriques, des liaisons mécaniques entre deux platines et des moyens mécaniques d'asservissement de la rotation des platines. Sur l'aspect des configurations géométriques on observe :
- deux parois latérales en saillie, 11 et 12, formées par ledit premier évidement ;
- deux sections cylindriques 13, 13 appartenant à un même premier cylindre partiellement fictif et usinées à la surface supérieure desdites parois latérales 11 et 12.

Sur l'aspect des liaisons mécaniques entre les deux dites platines 1 et 2, des moyens de glissière sont mis en évidence sous forme d'une paire de glissières 14, 14 en arc de cercle, fixées sur la face extérieure respective des deux parois latérales 11 et 12, chacune de ces glissières étant pourvue d'une rainure configurée en V, 16.

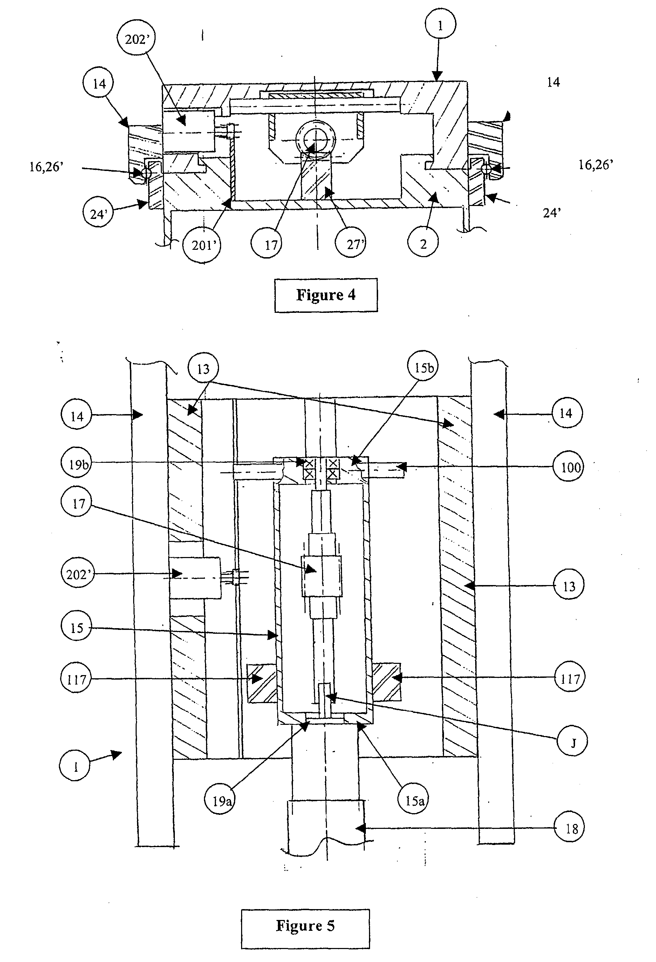

Sur l'aspect des moyens mécaniques d'asservissement, on distingue :
- un châssis 15 s'étendant dans la direction longitudinale du premier évidement entre les deux dites parois latérales 11 et 12 et comportant deux faces d'extrémité opposées 15a et 15b ;
- un moteur de commande 18 fixé sur l'une des deux dites faces d'extrémité dudit châssis 15, par exemple la face 15a de la figure 2, l'arbre dudit moteur étant supporté par un palier 19a observable en figure 5 et logé dans une ouverture de ladite face d'extrémité 15a du châssis 15 ;
- une vis sans fin 17 montée de façon centrale entre les deux dites faces d'extrémité opposées 15a, 15b et dont une extrémité est accouplée à l'arbre dudit moteur de commande 18 par des moyens classiques et dont l'autre extrémité est supportée par une butée à billes 19b observable en figure 5, et logée dans une ouverture de l'autre face 15b desdites faces d'extrémité 15a, 15b du châssis 15.

La figure 3 représente, dans une vue de dessous, et en perspective, la face inférieure de la platine intermédiaire 2 dans laquelle sont rassemblés les éléments complémentaires de ceux décrits en relation avec la figure 2.

Tout d'abord, on observe les parois latérales 21' et 22' formées par le second évidement réalisé dans la face inférieure de la platine intermédiaire 2.

Les surfaces inférieures de ces parois latérales 21' et 22' sont usinées sous la forme de deux sections cylindriques convexes 23', 23' appartenant à un même second cylindre partiellement fictif de même axe central que ledit premier cylindre partiellement fictif, mais de rayon légèrement inférieur. Ainsi, les deux sections 23', 23' coopèrent avec les deux sections 13, 13 pour permettre une rotation libre de la platine intermédiaire 2 par rapport à la platine inférieure 1 autour dudit axe de tangage T.

Pour que la platine intermédiaire 2 reproduise une combinaison de son propre mouvement de tangage et d'un mouvement quelconque, notamment, un mouvement de rotation en lacet, subi par la platine inférieure, une liaison mécanique spécifique est nécessaire entre ces deux platines 1 et 2.

Pour ce faire, une seconde paire de glissières 24', 24' en arc de cercle, fixées sur la face extérieure respective des deux parois latérales 21' et 22', et munies d'une rainure 26' configurée en V et montées de façon complémentaire à la première paire de glissières 14, 14, coopère avec cette dernière pour réaliser un chemin de billes assurant la liaison mécanique entre les deux platines 1 et 2, le chemin de billes étant constitué par les deux rainures en V 16 et 26' montées de façon opposée, comme le montre la coupe transversale de la figure 5.

La face inférieure 20' de ladite platine intermédiaire 2 définie après réalisation du second évidement présente une rainure centrale 25', longitudinale, parallèle à la direction d'extension de ce second évidement. Cette rainure est destinée à recevoir, pour la fixer et la centrer, une crémaillère 27'se présentant sous forme d'une pièce rapportée 29`qui supporte les dents de la crémaillère sur une surface en arc de cercle dont le centre se situe sur l'axe commun des premier et second cylindres, partiellement fictifs. Lorsque la face inférieure de la platine 2 est liée à la face supérieure de la platine 1 par l'intermédiaire desdites glissières 14, 14 et 24', 24', la crémaillère vient coopérer avec la vis sans fin 17 des moyens mécaniques d'asservissement de la platine inférieure 1 commandés par le moteur 18. Ce dernier qui reçoit des informations de l'électronique calculant les grandeurs d'asservissement active la vis sans fin qui, à son tour, entraîne la crémaillère 27'pour mettre en rotation la platine 2 par rapport à la platine 1 autour dudit axe de tangage T. L'angle de cette rotation correspondant à une position relative déterminée et instantanée des deux dites platines 1 et 2 est appelé "angle de recopie de position en tangage".

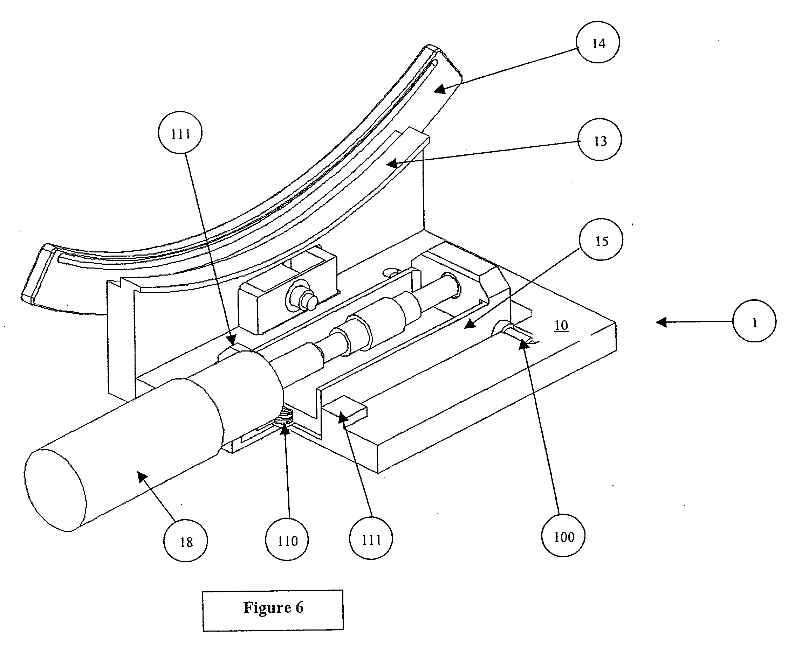

La précision d'un tel asservissement mécanique requiert un rattrapage de jeu efficace réalisé par un dispositif spécifique. Un tel dispositif selon le mode préféré de réalisation est représenté dans les figures 5 et 6 décrites ci-dessous.

La figure 4 représente une coupe transversale selon le plan AA de la figure 2 de la platine inférieure 1 et de la face inférieure de la platine intermédiaire 2 montrant la crémaillère 27'engrenant la vis sans fin 17 ainsi que l'assemblage des deux paires de glissières 14, 14 et 24' et 24' montées de façon à coopérer pour constituer le chemin de billes 16, 26'.

La figure 5 représente une coupe longitudinale de la platine inférieure 1 selon le plan BB de la figure 2 mettant en évidence les glissières 14, 14, les sections cylindriques concaves 13, 13, la vis sans fin 17, le châssis 15 rectangulaire avec ses deux dites faces d'extrémité, l'une 15a supportant l'arbre du moteur 18 par l'intermédiaire dudit palier 19a et l'autre 15b supportant une extrémité de la vis sans fin 17 à l'aide d'une butée à billes 19b, l'accouplement entre vis sans fin et arbre moteur étant réalisé au point J par des moyens classiques.

Le dispositif de rattrapage de jeu utilisé dans le mode préféré de réalisation de l'invention est également représenté dans les figures 5 et 6. La figure 6 en particulier montre l'ensemble de ce dispositif dans une vue en perspective de la face supérieure 10 de la platine inférieure 1 dans laquelle certains éléments ont été supprimés pour plus de clarté. Une broche de pivotement 100 solidaire de la base inférieure du châssis 15 au niveau de la face d'extrémité 15b opposée à la face d'extrémité 15a supportant le moteur de commande 18, est également montée à pivotement sur la face 10 de la platine inférieure 1 à l'aide d'un palier fixé dans cette dernière. Le châssis 15 peut pivoter autour de cette broche de pivotement 100 de façon que la vis sans fin 17 reste en permanence au contact des dents de la crémaillère 27 lors du mouvement de rotation de la platine 2. Ledit mouvement de pivotement est contrôlé par un ressort de pression 110 monté sur un support destiné à prérégler la tension du ressort, l'ensemble ressort et support étant disposé de façon centrale sous le châssis 15 au voisinage de l'extrémité inférieure du châssis proche du moteur 18.

De plus, deux butées de guidage 111, 111 solidaires de la face supérieure 10 de la platine inférieure 1 sont destinées à guider le mouvement de pivotement du châssis 15 autour de ladite broche 100 en éliminant tout mouvement transverse.

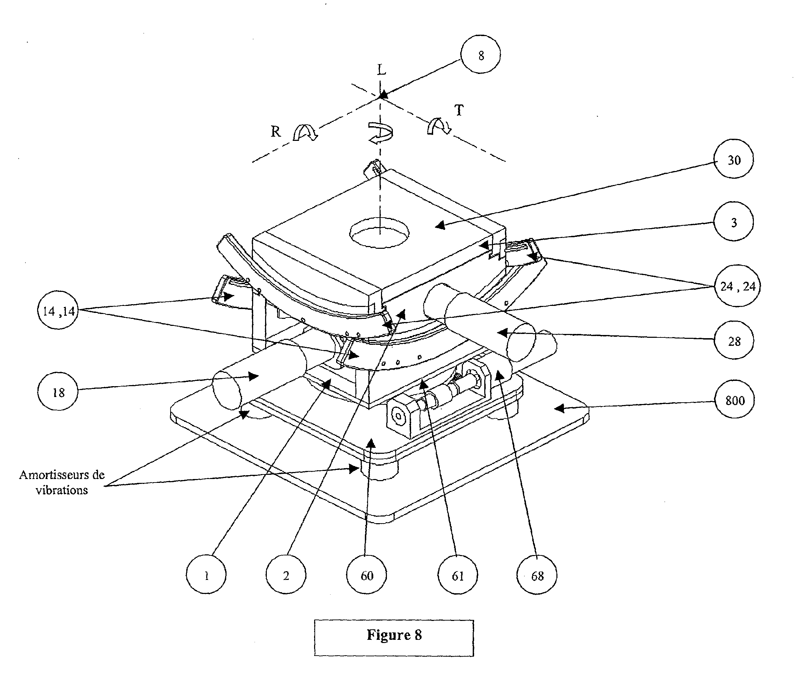

La description de la face supérieure 20 de la platine intermédiaire 2 avec tous ses éléments de liaison et d'asservissement mécaniques est équivalente à celle de la face supérieure 10 de la platine inférieure 1, à l'exception de l'orientation de l'évidement de la face supérieure 20 qui est perpendiculaire à celui de la face 10 et il en est de même des orientations respectives des glissières 24, 24, des sections cylindriques concaves et du moteur de commande 28 (figures 3 et 8).

Ladite face supérieure 20 de la platine intermédiaire 2 est combinée avec la face inférieure 30' de la platine supérieure 3, cette face 30' étant équivalente à la face inférieure 20' de la platine intermédiaire 2 avec tous ses éléments de liaison et d'asservissement mécaniques et en tenant compte des remarques précédentes pour ce qui concerne l'orientation des évidements, glissières et sections cylindriques. L'angle de rotation entre la platine intermédiaire 2 et la platine supérieure 3 est dit "angle de recopie de position en roulis".

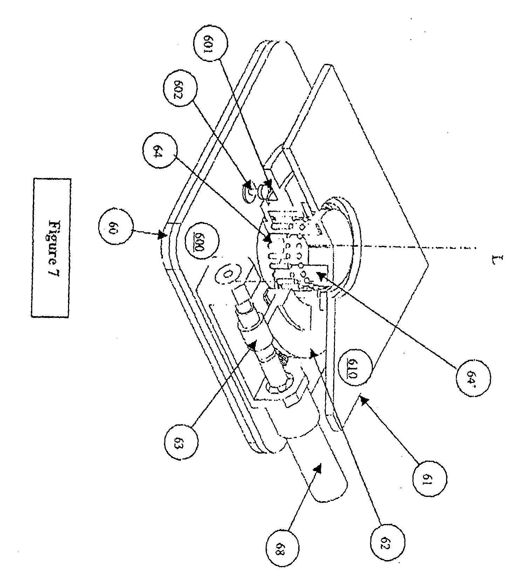

La figure 7 représente la deuxième combinaison de deux platines 60, 61 d'un second type, configurées, chacune, sous forme d'une plaque rigide, par exemple, métallique et comportant :
- une platine de base 60 rendue solidaire, dans un mode préféré de réalisation, observable en figure 8, de l'embase 800 disposée sur l'engin porteur à l'aide de moyens classiques d'amortisseurs statiques de vibrations. Dans un autre mode de réalisation, des moyens de fixation classiques comme des vis ou équivalent peuvent solidariser la platine de base 60 avec la face supérieure 30 de la platine supérieure 3 ;
- une platine mobile 61 rendue mobile en rotation par rapport à la platine de base 60 autour dudit axe de lacet L, de telle sorte que, comme cela a déjà été mentionné, les axes T, R et L soient orthogonaux deux à deux et se coupent en un point unique 8 (figure 1), centre de cardan fictif du système. L'angle de rotation relative entre la platine 60 et 61 est dit "angle de recopie de position en lacet".

Dans le mode préféré de réalisation (figure 8), la face inférieure 10' de la platine inférieure 1 est rendue solidaire de ladite platine mobile 61 par des moyens classiques de fixation comme des vis ou équivalent. Cet agencement solidaire permet de récupérer au niveau de la face supérieure 30 de la platine supérieure 3 un mouvement global combinant les trois mouvements de rotation autour des trois axes respectifs T, R, L de tangage, de roulis et de lacet.

Les troisièmes moyens de liaison mécanique reliant les deux dites platines 60 et 61 comportent un dispositif de roulement à aiguilles combiné avec une butée à billes 64, 64' à jeu réglable, permettant ainsi à la platine 61 de tourner par rapport à la platine 60 autour de l'axe de lacet L.

De plus, ledit mouvement de rotation autour de l'axe de lacet L est commandé par des troisièmes moyens mécaniques d'asservissement. Ces derniers peuvent être constitués d'un ensemble analogue aux dits premiers et seconds moyens mécaniques d'asservissement, c'est à dire d'une troisième crémaillère 62, d'une troisième vis sans fin 63 et d'un troisième moteur de commande 68.

Cependant, la troisième crémaillère est différente en ce qu'elle se présente sous la forme d'une couronne circulaire supportant à la périphérie les dents de la crémaillère 62 et qu'elle est située dans un plan parallèle à la platine tournante 61 et solidaire de cette dernière.

Les éléments de châssis, de vis sans fin 63 et de moteur de commande 68, analogues essentiellement dans leur fonction et leur conception à ceux des premiers et seconds moyens mécaniques d'asservissement sont disposés sur la face supérieure 600 de la platine de base 60.

La figure 8 représente schématiquement un montage complet de la plate-forme selon le mode préféré de réalisation dans lequel la première combinaison de trois platines du premier type est située au-dessus de la seconde combinaison de deux platines du second type.

Dans ces conditions, la platine de base 60 est fixée sur l'embase 800 par l'intermédiaire de moyens classiques d'amortisseurs statiques, elle-même disposée sur l'engin porteur et la surface externe asservie est représentée par la face supérieure 30 de la platine supérieure 3, celle-ci étant éventuellement percée d'une ouverture pour y fixer un objet tel qu'une caméra.

Le fonctionnement de ladite plate-forme repose sur la détection et la mesure des variations angulaires et les vitesses de variation angulaire définissant la position instantanée de la surface supérieure externe 30 par rapport à la position dudit plan de référence orienté.

Lesdits moyens de détection et de mesure comportent essentiellement des capteurs angulaires parmi lesquels on peut distinguer deux types de capteurs en fonction du mode de fonctionnement de la plate-forme.

Le premier type concerne ceux qui sont mis en oeuvre pendant la phase de couplage au cours de laquelle la plate-forme reproduit les mouvements de l'engin porteur, les chaînes d'asservissement n'étant pas actives. Dans ces conditions, il s'agit simplement de mesurer les angles respectifs de recopie de position à l'aide de trois dispositifs, chacun étant constitué :
- d'une crémaillère supplémentaire représentée par exemple en 201' sur les figures 3, 4 et en 601 sur la figure 7 ;
- d'un détecteur angulaire classique muni d'une roue dentée qui coopère avec ladite crémaillère supplémentaire pour déterminer les angles de recopie de position en tangage, roulis et lacet : un tel détecteur est représenté par exemple en 202' sur les figures 4 et 5 et en 602 sur la figure 7.

La mesure de ces angles de recopie de position permet de suivre les mouvements de l'engin porteur par rapport au plan de référence orienté et de ramener la plate-forme à une position initiale déterminée, ce qui est nécessaire avant de mettre en oeuvre les chaînes d'asservissement de la plate-forme.

Le deuxième type de capteurs concerne les moyens qui sont mis en oeuvre pendant la phase de découplage au cours de laquelle la surface supérieure externe 30 de ladite plate-forme reste dans le plan de référence orienté par l'action des chaînes d'asservissement, chaque axe de rotation (T, R, L) possédant sa propre chaîne d'asservissement. Les capteurs utilisés au cours de cette phase sont spécifiquement destinés à fournir les paramètres de correction angulaire aux chaînes respectives d'asservissement (T, R, L) qui entraînent les moteurs de commande (18, 28, 68) pour maintenir la surface supérieure externe 30 dans ledit plan de référence orienté. Les capteurs concernés comprennent :
- deux inclinomètres (non représentés) situés sur la face supérieure externe 30, tous deux destinés à mesurer les deux angles d'inclinaison respectifs en tangage et en roulis de ladite surface supérieure externe 30 correspondant à une position instantanée,
- un magnétomètre (non représenté) qui, corrigé de la "Déclinaison" donne le Nord géographique nécessaire à l'orientation en lacet de la plate-forme, ce magnétomètre étant situé dans un endroit non perturbé par des interférences magnétiques,
- trois gyromètres dont deux sont situés sur la surface supérieure 30 de la plate-forme pour la mesure des vitesses de variation angulaire en tangage et en roulis et un sur la face mobile 61 de la platine de second type pour une mesure analogue en lacet. Cette disposition résulte d'un compromis entre sensibilité et encombrement physique des composants.

Les différents capteurs fournissent les paramètres angulaires à une électronique classique de commande d'asservissement pour que les trois chaînes d'asservissement respectives correspondant aux trois axes de rotation et reliées aux moteurs de commande respectifs (18, 28, 68) annulent les variations mesurées en tenant compte des aspects mécaniques (frottement, couple moteur, rapport de réduction, etc.) desdites chaînes d'asservissement respectives.

Plusieurs modifications ou variantes sont susceptibles d'être apportées au mode préféré de réalisation de l'invention décrit ci-dessus, mais elles restent dans le champ de l'invention précisé par les revendications jointes.

## Revendications

1. Système de plate-forme stabilisée et asservie, fixé sur un engin porteur fixe ou mobile, destiné à maintenir une surface plane extérieure de la plate-forme dans un plan de référence prédéterminé et orienté selon une direction de référence prédéterminée,
**caractérisé en ce qu'**il comprend :
- une embase (800) fixée au support de plate-forme disposé sur l'engin porteur,
- une première combinaison de trois platines d'un premier type (1, 2, 3), chacune étant constituée d'un bloc métallique de forme parallélépipédique comportant une face inférieure proche de l'engin porteur et une face supérieure opposée à ladite face inférieure par rapport audit bloc, et comprenant :
- une platine inférieure (1)
- une platine intermédiaire (2) rendue solidaire de la platine inférieure (1) par des premiers moyens de liaison mécanique (14, 24') et, de plus, rendue mobile en rotation autour d'un premier axe dit de tangage (T) par des premiers moyens mécaniques d'asservissement (17, 27) et coopération de configurations géométriques complémentaires (13, 23') concernant respectivement la face supérieure (10) de ladite platine inférieure (1) et la face inférieure (20') de ladite platine intermédiaire (2),
- une platine supérieure (3) rendue solidaire de ladite platine intermédiaire (2) par des seconds moyens de liaison mécanique et, de plus, rendue mobile en rotation autour d'un second axe, dit de roulis (R), par des seconds moyens mécaniques d'asservissement et coopération de configurations géométriques complémentaires concernant, respectivement, la face supérieure (20) de la platine intermédiaire (2) et la face inférieure (30') de la platine supérieure (3),
- une seconde combinaison de deux platines d'un second type (60, 61) superposées, chacune étant constituée d'une plaque rigide, comportant :
- une platine de base (60) montée, de façon solidaire,
soit sur ladite embase (800),
soit sur ladite face supérieure (30) de la platine supérieure (3), et
- une platine mobile (61) en rotation autour d'un troisième axe dit de lacet (L) et montée à rotation sur ladite platine de base (60),
les deux dites platines de base (60) et mobile (61) étant reliées par des troisièmes moyens de liaison mécanique,
ladite platine mobile (61) étant rendue mobile en rotation par la commande de troisièmes moyens mécaniques d'asservissement,
le mouvement global de ladite surface plane externe (30) de ladite plate-forme résultant de la combinaison des trois mouvements de rotation autour de trois axes dits, respectivement, de tangage, de roulis et de lacet (T, R, L),
lesdits axes de tangage, de roulis et de lacet étant orthogonaux deux à deux et se coupant en un point unique (8), ce dernier constituant le centre de cardan fictif du système,
- des moyens de détection et de mesure de variations angulaires ainsi que des vitesses de variation angulaire des positions instantanées de ladite surface plane extérieure de ladite plate-forme par rapport à la position dudit plan de référence orienté, lesdites variations étant essentiellement provoquées par les mouvements de l'engin porteur,
lesdits moyens de détection et de mesure émettant des signaux électriques quantifiés avec signe,
- des moyens électroniques de calcul destinés
à calculer les grandeurs d'asservissement en réponse aux signaux émis par lesdits moyens de détection et de mesure, et
à réaliser les asservissements requis par transmission desdites grandeurs d'asservissement calculées aux moteurs de commande (18, 28, 68) des premiers, seconds et troisièmes moyens mécaniques d'asservissement.

2. Système de plate-forme selon la revendication 1, **caractérisé, de plus, en ce que** chacune des trois platines d'un premier type (1, 2, 3) de ladite première combinaison est configurée de façon spécifique, de sorte que :
- ladite platine inférieure (1) présente, sur sa face supérieure (10), un premier évidement central réalisé sur la longueur de ladite platine inférieure formant ainsi deux parois latérales (11, 12) dont les surfaces supérieures sont usinées de façon à obtenir une première paire de surfaces (13, 13) formant deux sections cylindriques concaves, appartenant à un même premier cylindre partiellement fictif,
- ladite platine intermédiaire (2) présente sur sa face inférieure (20') un second évidement central réalisé parallèlement au premier évidement sur la longueur de ladite platine intermédiaire (2) de façon à former deux parois latérales (21', 22') dont les surfaces inférieures sont usinées en vue d'obtenir une seconde paire de surfaces (23', 23') formant deux sections cylindriques convexes appartenant à un même deuxième cylindre partiellement fictif et complémentaires des deux surfaces concaves (13, 13) de ladite première paire de surfaces, lesdites première et seconde paires de surfaces respectivement concaves (13, 13) et convexes (23', 23') étant destinées à coopérer lors du mouvement de rotation en tangage de la platine intermédiaire par rapport à la platine inférieure, lesdits premier et second cylindres partiellement fictifs possédant un premier axe central commun,
- ladite platine intermédiaire (2) présente sur sa face supérieure (20) un troisième évidement central réalisé, dans une direction perpendiculaire aux premier et second évidements, sur la largeur de ladite platine intermédiaire de façon à former deux parois latérales dont les surfaces supérieures sont usinées en vue d'obtenir une troisième paire de surfaces formant deux sections cylindriques concaves, appartenant à un même troisième cylindre partiellement fictif,
ladite platine supérieure (3) présente, sur sa face inférieure (30'), un quatrième évidement central réalisé, dans une direction parallèle audit troisième évidement, sur la largeur de ladite platine supérieure (3) de façon à former deux parois latérales dont les surfaces inférieures sont usinées en vue d'obtenir une quatrième paire de surfaces formant deux sections cylindriques convexes, appartenant à un même quatrième cylindre, partiellement fictif, et complémentaires des deux surfaces concaves de ladite troisième paire de surfaces concaves, lesdites troisième et quatrième paires de surfaces, respectivement concaves et convexes, étant destinées à coopérer lors du mouvement de rotation en roulis de la platine supérieure (3) par rapport à la platine intermédiaire (2),
les troisième et quatrième cylindres partiellement fictifs, possédant un second axe central commun, lesdits premier et second axes centraux étant orthogonaux entre eux et situés dans un même plan parallèle à ladite surface plane externe (30) de ladite plate-forme.

3. Système de plate-forme selon la revendication 1 ou 2, **caractérisé de plus, en ce que** lesdits premiers et seconds moyens de liaison mécanique entre chaque paire respective de platines du premier type (1, 2 ; 2, 3), adjacentes et superposées comprennent :
- des premier et second chemins de bille (16, 26'), chacun d'entre eux étant constitué :
- de deux paires de glissières (14, 14 ; 24', 24') en forme d'arc de cercle montées de chaque côté de chaque paire de platines du premier type adjacentes et superposées (1,2; 2, 3) et à lier mécaniquement de sorte qu'une glissière (14) de chaque paire de glissières soit fixée sur une platine (1) de ladite paire de platines du premier type (1, 2) adjacentes et superposées et que l'autre glissière (24') de chaque paire de glissières (24', 24') soit fixée sur l'autre platine (2) de ladite paire de platines du premier type, adjacentes et superposées (1, 2), les arcs de cercle de chaque paire de glissières étant concentriques avec les surfaces cylindriques respectivement concaves et convexes des platines du premier type correspondantes ;
- d'une rainure configurée en V (16, 26'), réalisée dans chaque glissière de chaque paire de glissières (14, 14 ; 24', 24'), les deux glissières de chaque dite paire de glissières étant disposées de sorte que les rainures en V respectives soient opposées l'une à l'autre pour former un chemin de billes (16, 26') lors de la fixation desdites glissières ;
- des moyens de fixation et de centrage desdites glissières sur lesdites platines du premier type correspondantes.

4. Système selon la revendication 1 ou 2 ou 3, **caractérisé de plus en ce que** lesdits troisièmes moyens de liaison mécanique entre les deux platines du second type (60, 61) sont constituées :
- d'un dispositif de roulement à aiguilles combiné avec une butée à billes (64), à jeu réglable.

5. Système de plate-forme selon l'une quelconque des revendications précédentes, **caractérisé, de plus, en ce que** les premiers moyens mécaniques d'asservissement comportent deux ensembles,
- le premier ensemble étant disposé sur la face supérieure (10) de la platine inférieure (1), le second étant disposé sur la face inférieure (20') de la platine intermédiaire (2), le premier ensemble étant constitué :
- d'un premier châssis (15),
- d'un premier moteur de commande (18) fixé sur une première face d'extrémité (15a) dudit châssis (15),
- d'un premier palier (19a) supportant l'arbre dudit premier moteur de commande (18) et monté dans une ouverture transversale de ladite première face d'extrémité (15a),
- d'une première butée à billes (19b) logée dans une seconde face d'extrémité (15b) dudit châssis (15) opposée et parallèle à ladite première face d'extrémité (15a),
- d'une première vis sans fin (17) d'entraînement de la rotation en tangage de la platine intermédiaire (2), logée dans ledit premier châssis (15) et s'étendant de façon centrale entre une de ses extrémités reçue dans ladite première butée à billes (19b) et son autre extrémité (J) accouplée à l'arbre dudit premier moteur de commande (18), et
- d'un premier dispositif de rattrapage de jeu (100, 110, 111) ;
- le second ensemble étant porté par la face inférieure (20') de la platine intermédiaire (2) et constituée :
- d'une première rainure centrale (25') formée dans ledit second évidement entre lesdites parois latérales (21', 22') et s'étendant dans une direction parallèle audit second évidement,
- d'une première pièce rapportée constituant une première crémaillère (27') dont les dents sont portées par un support (29') en forme d'arc de cercle dont le centre se situe sur l'axe de tangage (T),
ladite première crémaillère (27') étant reçue dans ladite première rainure centrale (25') dans laquelle elle est fixée et centrée afin de coopérer avec ladite première vis sans fin (17) dudit premier ensemble,
ladite coopération entre ladite première vis sans fin (17) et ladite première crémaillère (27') étant activée par ledit premier moteur de commande (18).

6. Système de plate-forme selon l'une quelconque des revendications précédentes, **caractérisé, de plus, en ce que** les seconds moyens mécaniques d'asservissement sont constitués de deux ensembles identiques aux deux ensembles correspondants des premiers moyens mécaniques d'asservissement,
- le premier ensemble supplémentaire étant disposé sur la face supérieure (20) de la platine intermédiaire (2) et étant constitué :
- d'un second châssis,
- d'un second moteur de commande (28),
- d'un second palier de support d'arbre dudit second moteur,
- d'une seconde butée à billes,
- d'une seconde vis sans fin,
- d'un second dispositif de rattrapage de jeu,
- le second ensemble supplémentaire étant porté par la face inférieure (30') de la latine supérieure (3) et étant constitué :
- d'une seconde rainure centrale,
- d'une seconde crémaillère,
l'assemblage et le fonctionnement de chacun des éléments constituant les deux ensembles supplémentaires restant identiques à ceux des deux ensembles constituant les premiers moyens mécaniques d'asservissement.

7. Système de plate-forme selon la revendication 5 ou 6, **caractérisé de plus, en ce que** les premier et second dispositifs de rattrapage de jeu sont identiques et comprennent, chacun :
- au moins une broche de pivotement (100) solidaire, d'une part, d'une extrémité de la base inférieure dudit châssis respectif éloignée dudit moteur de commande respectif et solidaire, d'autre part, de la face supérieure (10) de la platine inférieure (1) ou, respectivement, de la face supérieure (20) de la platine intermédiaire (2) par l'intermédiaire d'un palier recevant ladite broche de pivotement (100) et fixée sur la face supérieure (10) de la platine inférieure (1) ou, respectivement, sur la face supérieure (20) de la platine intermédiaire (2), ledit châssis respectif pouvant pivoter autour de ladite broche de pivotement respective ;
- au moins deux butées de guidage (111, 111) solidaires de la face supérieure (10) de la platine inférieure (1) ou, respectivement, de la face supérieure (20) de la platine intermédiaire (2) et fixées de façon à guider le mouvement de pivotement du châssis respectif autour de ladite broche respective de pivotement en éliminant tout autre mouvement transverse;
- au moins, un ressort de pression (110) monté sur un support destiné à prérégler la tension du ressort, l'ensemble support et ressort (110) étant disposé de façon centrale sous le châssis respectif au voisinage d'une extrémité de la base inférieure dudit châssis respectif proche du moteur de commande respectif afin de maintenir la vis sans fin respective au contact sans jeu de la crémaillère correspondante.

8. Système de plate-forme selon l'une quelconque des revendications précédentes, **caractérisé, de plus, en ce que** les troisièmes moyens mécaniques d'asservissement comportent :
- une troisième crémaillère (62) de forme circulaire dont le centre se situe sur l'axe de lacet (L) et portée par ladite platine mobile (61),
- une troisième vis sans fin (63) conçue et montée dans un châssis de façon identique à celle des premiers et seconds moyens mécaniques d'asservissement et entraînée avec rattrapage de jeu par un troisième moteur de commande (68) pour activer un mouvement de rotation en lacet de ladite platine mobile (61).

9. Système de plate-forme selon l'une quelconque des revendications précédentes **caractérisé, de plus, en ce que** les moyens détection et de mesure comprennent :
- au moins trois dispositifs de mesure des angles de recopie de position respectivement en tangage, en roulis et en lacet, constitués, chacun, d'une crémaillère supplémentaire (201', 601) et d'un détecteur angulaire muni d'une roue dentée (202', 602) destinée à coopérer avec ladite crémaillère supplémentaire ;
- au moins deux inclinomètres destinés à mesurer les angles d'inclinaison en tangage et en roulis de la surface externe asservie par rapport au plan de référence orienté ;
- au moins un magnétomètre destiné à mesurer l'angle d'inclinaison en lacet par rapport au Nord géographique ;
- au moins trois gyromètres destinés à mesurer les vitesses de variations angulaires en tangage, en roulis et en lacet,
chacun de ces capteurs transmettant des signaux électriques quantifiés avec signe à une électronique de calcul et de commande des chaînes d'asservissement.
